# EUROPÄISCHE PATENTSCHRIFT

(11) **EP 1 290 339 B1**
(45) Veröffentlichungstag und Bekanntmachung des Hinweises auf die Patenterteilung: **04.08.2004**
(21) Anmeldenummer: 01953100.3
(22) Anmeldetag: 19.05.2001
(51) Int. Cl.: F02M 61/18

(54) **BRENNSTOFFEINSPRITZSYSTEM**
FUEL INJECTION SYSTEM
SYSTEME D'INJECTION DE CARBURANT

(30) Priorität: 26.05.2000 DE 10026324
(43) Veröffentlichungstag der Anmeldung: 12.03.2003
(73) Patentinhaber: ROBERT BOSCH GMBH, 70442 Stuttgart (DE)
(72) Erfinder: WUERFEL, Gernot, 71665 Vaihingen/Enz (DE)
(86) Internationale Anmeldenummer: PCT/DE2001/001913
(87) Internationale Veröffentlichungsnummer: WO 2001/090571

(56) Entgegenhaltungen:
- DE-A- 19 804 463
- US-A- 5 775 289
- US-A- 6 045 063
- PATENT ABSTRACTS OF JAPAN vol. 1999, no. 05, 31. Mai 1999 (1999-05-31) & JP 11 050848 A (TOYOTA MOTOR CORP), 23. Februar 1999 (1999-02-23)

## Beschreibung

### Stand der Technik

Die Erfindung geht aus von einem Brennstoffeinspritzsystem nach der Gattung des Anspruchs 1 bzw. des Anspruchs 9.

Bei gemischverdichtenden, fremdgezündeten Brennkraftmaschinen mit innerer Gemischbildung ist für den Schichtladebetrieb im Zündkerzenbereich eine "Gemischwolke" erforderlich, die ein bestimmtes Brennstoff-Luftverhältnis im zündfähigen Bereich aufweist. Zu diesem Zweck werden Brennstoffeinspritzventile mit Düsen eingesetzt, die nach innen oder nach außen öffnen und einen Kegelstrahl erzeugen.

Beispielsweise ist aus der DE 198 04 463 A1 ein Brennstoffeinspritzsystem für gemischverdichtende, fremdgezündete Brennkraftmaschinen bekannt, welches mit wenigstens einem Brennstoffeinspritzventil, das Brennstoff in einen von einer Kolben-/Zylinder-Anordnung gebildeten Brennraum einspritzt und mit einer in den Brennraum ragenden Zündkerze versehen ist. Der Düsenkörper des Brennstoffeinspritzventils ist dabei mit wenigstens einer Reihe von über den Umfang des Düsenkörpers verteilt angeordneten Einspritzlöchern versehen. Durch eine gezielte Einspritzung von Brennstoff über die Einspritzlöcher wird ein strahlgeführtes Brennverfahren durch Bildung einer Gemischwolke realisiert, wobei wenigstens ein Strahl in Richtung auf die Zündkerze gerichtet ist. Weitere Strahlen sorgen dafür, daß eine wenigstens annähernd geschlossene bzw. zusammenhängende Gemischwolke gebildet wird.

Aus der DE 196 42 653 C1 ist ein Verfahren zur Bildung eines zündfähigen Brennstoff-Luftgemisches bekannt. In den Zylindern von direkt einspritzenden Brennkraftmaschinen ist ein zündfähiges Brennstoff-Luftgemisch bildbar, indem in jeden von einem Kolben begrenzten Brennraum mittels eines Injektors bei Freigabe einer Düsenöffnung durch Abheben eines Ventilgliedes von einem die Düsenöffnung umfassenden Ventilsitz Brennstoff eingespritzt wird. Um unter allen Betriebsbedingungen der Brennkraftmaschine, insbesondere im Schichtladebetrieb, eine verbrauchs- und emissionsoptimierte Gemischbildung in jedem Betriebspunkt des gesamten Kennfeldes zu ermöglichen, ist vorgesehen, daß der Öffnungshub des Ventilgliedes und die Einspritzzeit variabel einstellbar sind.

Auch aus der DE 38 08 635 C2 ist eine Brennstoffeinspritzvorrichtung zum direkten Einspritzen von Brennstoff in den Zylinder einer gemischverdichtenden Brennkraftmaschine bekannt. Die Brennstoffeinspritzvorrichtung umfaßt dabei ein Brennstoffeinspritzventil, das in der Zylinderwand in einigem Abstand vom Zylinderkopf und gegenüber einer Auslaßöffnung angeordnet ist und eine Ausgangsöffnung aufweist, wobei die Strahlachse des Brennstoffeinspritzventils auf den Bereich um die im Zylinderkopf angeordnete Zündkerze gerichtet ist. Das Brennstoffeinspritzventil weist dabei eine magnetbetätigte Ventilnadel mit schraubenförmigen Drallnuten zum Erzeugen einer Drallströmung des Einspritzstrahls auf. Die Gesamtquerschnittsfläche der Drallnuten ist um mindestens die Hälfte kleiner als die Querschnittsfläche der Ausgangsöffnung, wobei das Brennstoffeinspritzventil oberhalb der Spülöffnung angeordnet ist und mit seiner Strahlachse auf den in der Zylinderkopfmitte angeordneten Zündpunkt zeigt.

Bei den aus den obengenannten Druckschriften bekannten Einspritzsystemen werden mehrheitlich wand- bzw. luftgeführte Brennverfahren realisiert. Das luftgeführte Brennverfahren ist sehr stark von der Bewegung der einströmenden Luft abhängig, die die Aufgabe hat, ein zündfähiges Brennstoff-Luftgemisch über den gesamten Kennfeldbereich des Schichtladebetriebs exakt in den Elektrodenbereich der Zündkerze zu transportieren. Beim wandgeführten Brennverfahren wird der Brennstoff durch Unterstützung durch mehr oder weniger zerklüftete Brennraumgeometrien unter gleichzeitiger Gemischbildung zur Zündkerze getragen.

Der Gemischtransport zur Zündkerze gelingt bei wand- und luftgeführten Brennverfahren im Leerlauf- und unteren Teillastbetrieb nur sehr unvollkommen, im mittleren Teillastbetrieb zum Teil nur mit unvertretbar geringen Serienstreuungen der verwendeten Hochdruckeinspritzventile bzw. der Strömungsführung durch das Saugrohr. Die mangelhafte Reproduzierbarkeit zeigt sich vor allem an überhöhten Emissionen von unverbrannten Kohlenwasserstoffen, verursacht durch einzelne Verbrennungsaussetzer. Diese Eigenschaften führen zu einem weiteren gravierenden Nachteil der beiden erwähnten Brennverfahren: der Motor kann im Leerlauf- und unteren Teillastbereich nicht ungedrosselt gefahren werden, da aufgrund des großen Abstands zwischen Brennstoffeinspritzventil und Zündkerze kleinere Einspritzmengen nicht mehr in der für eine stabile Entflammung erforderlichen Gemischkonzentration die Zündkerze erreichen. Das bedeutet, daß das Brennstoff-Luftgemisch an den Kerzenelektroden zu mager wird. Durch die Ansaugluftdrosselung verringert sich jedoch der Verbrauchsvorteil gegenüber gemischverdichtenden, fremdgezündeten Brennkraftmaschinen mit Saugrohreinspritzung.

### Vorteile der Erfindung

Das erfindungsgemäße Brennstoffeinspritzsystem mit den kennzeichnenden Merkmalen des Anspruchs 1 oder des Anspruchs 9 hat demgegenüber den Vorteil, daß das Gemisch im Bereich der Zündkerze aufgrund der dort besonderen Ausbildung der Einspritzlöcher des Brennstoffeinspritzventils nicht zu fett und nicht zu mager wird, sonst aber durch ein annähernd geschlossenes kegelförmiges Strahlbild Magerbrücken fast gänzlich vermieden werden. Die erfindungsgemäße Maßnahme unterstützt die Entstehung eines stabilen Flammkerns.

Von Vorteil ist weiter, daß die Zündkerze weniger verrußt, die Thermoschockbelastung vermindert und die Zündwinkelunempfindlichkeit bei festem Einspritzzeitpunkt im gesamten Kennfeld, in dem Schichtbetrieb gefahren wird, verbessert wird. So kann das Einspritzen und Zünden gleichzeitig erfolgen.

Die Ausformung länglicher Einspritzlöcher hat den Vorteil, daß die Strömungsverluste beim Durchströmen der Einspritzlöcher abnehmen, wodurch der Betriebsdruck gesenkt werden kann.

Durch die in den Unteransprüchen aufgeführten Maßnahmen sind vorteilhafte Weiterentwicklungen des im Anspruch 1 bzw. des im Anspruch 9 angegebenen Brennstoffeinspritzsystems möglich.

Verschiedene Anordnungen der Einspritzlöcher sowie unterschiedliche Neigungswinkel gegeneinander können je nach den Anforderungen an das Brennstoffeinspritzsystem gewählt werden.

Von Vorteil ist insbesondere die längliche Ausbildung der die Zündkerze einschließenden Einspritzlöcher, da die Zündkerze bzw. die Zündkerzenelektroden innerhalb einer gewissen Toleranz, welche durch die Länge der Einspritzlöcher vorgegeben ist, mit variabler Einbautiefe montiert werden kann.

### Zeichnung

Bevorzugte Ausführungsbeispiele der Erfindung sind in der Zeichnung vereinfacht dargestellt und in der nachfolgenden Beschreibung näher erläutert. Es zeigen:
- Fig. 1: einen schematischen Schnitt durch ein Ausführungsbeispiel eines erfindungsgemäßen Brennstoffeinspritzsystems mit einem Brennstoffeinspritzventil,
- Fig. 2A-B eine: erste Gruppe von Ausführungsbeispielen für die erfindungsgemäße Ausgestaltung des Ventilkörpers des Brennstoffeinspritzventils,
- Fig. 3A-C: eine zweite Gruppe von Ausführungsbeispielen für die erfindungsgemäße Ausgestaltung des Ventilkörpers des Brennstoffeinspritzventils,
- Fig. 4A-B eine: dritte Gruppe von Ausführungsbeispielen für die erfindungsgemäße Ausgestaltung des Ventilkörpers des Brennstoffeinspritzventils und
- Fig. 5A-B: eine vierte Gruppe von Ausführungsbeispielen für die erfindungsgemäße Ausgestaltung des Ventilkörpers des Brennstoffeinspritzventils.

### Beschreibung der Ausführungsbeispiele

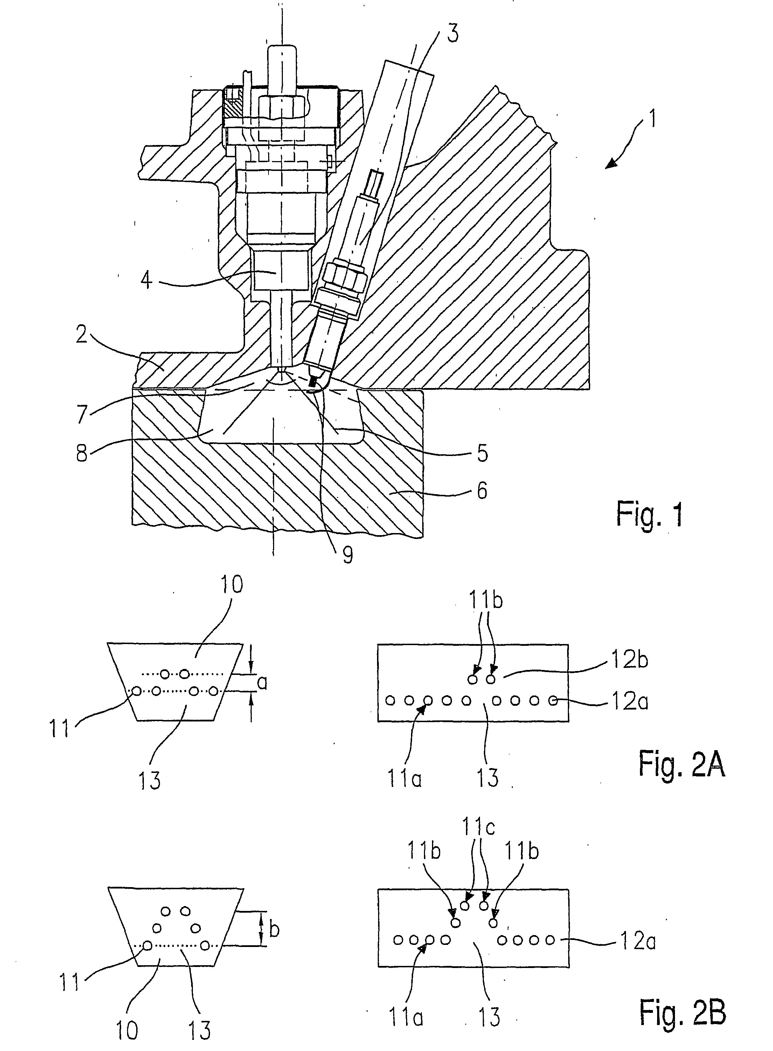

Fig. 1 zeigt in einer ausschnittsweisen, schematisierten Schnittdarstellung einen Längsschnitt durch eine gemischverdichtende Brennkraftmaschine 1. Die Brennkraftmaschine 1 weist einen Zylinderkopf 2 auf, in welchem eine Zündkerze 3 und ein Brennstoffeinspritzventil 4 in entsprechend gestalteten Ausnehmungen angeordnet sind. Da der Aufbau sowohl der Zündkerze 3 als auch des Brennstoffeinspritzventils 4 prinzipiell bekannt sind, kann auf eine weitergehende Beschreibung dieser Bauteile verzichtet werden.

Das Brennstoffeinspritzventil 4 spritzt Brennstoff in einem kegelförmigen Einspritzstrahl 5 in eine durch den Zylinderkopf 2, einen Kolben 6 sowie einen nicht dargestellten Zylinderwandung abgegrenzten Brennraum 7 ein. Der Brennraum 7 wird teilweise durch eine im Kolben 6 ausgebildete Brennraummulde 8 gebildet.

Das Brennstoffeinspritzventil 4 und die Zündkerze 3 sind so zueinander angeordnet, daß die Zündkerze 3 seitlich versetzt vom Brennstoffeinspritzventil 4 in den Brennraum 7 hineinragt, wobei sich Zündkerzenelektroden 9 im Bereich des Einspritzstrahls 5 befinden.

Die Form des Einspritzstrahls 5 ist dabei von der Gestaltung des abspritzseitigen Endes des Brennstoffeinspritzventils 4 abhängig. Das Brennstoffeinspritzventil 4 ist z. B. als nach innen öffnendes (I-Ventil) Brennstoffeinspritzventil 4 ausgeführt. Die Einspritzung des Brennstoffs in den Brennraum 7 erfolgt durch die Erregung eines elektromagnetischen oder piezoelektrischen Aktors, durch welchen eine nicht weiter dargestellte Ventilnadel bzw. ein mit dieser verbundener Ventilschließkörper von einem mit Einspritzlöchern versehenen Ventilkörper abhebt. Auf diese Weise wird Brennstoff durch das Brennstoffeinspritzventil 4 und die Einspritzlöcher im Ventilkörper in den Brennraum 7 gespritzt.

Erfindungsgemäße Ausgestaltungsbeispiele für die Einspritzlöcher im Ventilkörper werden in den Fig. 2-5 dargestellt und nachfolgend näher erläutert.

In den Fig. 2-5 ist jeweils auf der linken Seite der Ventilkörper 10 mit Einspritzlöchern 11 dargestellt, während auf der rechten Seite der jeweiligen Abbildungen ein Abrollbild der umfänglich auf dem Ventilkörper 10 angeordneten Einspritzlöcher 11 dargestellt ist.

In Fig. 2 sind zwei Ausführungsbeispiele für die Anordnung von Einspritzlöchern 11 dargestellt, bei welchen die Einspritzlöcher 11 in zwei Reihen 12a, 12b von Einspritzlöchern 11 bzw. mit aus der,Reihe 12a verschobenen Einspritzlöchern 11 angeordnet sind. Dabei bestehen die weiteren Reihen jeweils nur aus zwei einzelnen Einspritzlöchern 11, welche aus der Reihe 12a entgegen der Abspritzrichtung versetzt sind. Die beiden Reihen 12a, 12b in Fig. 2A weisen dabei einen axialen Abstand a zueinander auf. An der der Zündkerze 3 zugewandten Seite des Ventilkörpers 10 weist dabei eine der Reihen 12a eine Zündkerzenlücke 13 auf, wo ein Einspritzloch 11a ausgespart ist. Statt des in der einen Reihe 12a fehlenden Einspritzlochs 11 sind in der zweiten Reihe 12b zwei weitere Einspritzlöcher 11b eingebracht, um die Homogenität des Einspritzstrahls 5 bzw. der dadurch gebildeten Gemischwolke im Brennraum 7 zu gewährleisten.

Um eine weitere Homogenisierung des Einspritzstrahls 5 zu erreichen, können die Einspritzlöcher 11, wie in Fig. 2B dargestellt, auch verschoben angeordnet sein, wobei sich die am weitesten verschobenen Einspritzlöcher 11c in einem Abstand b von der Reihe 12a befinden. Die Zündkerzenlücke 13 kann auf diese Weise etwas vergrößert werden, ohne daß die Homogenität der Gemischwolke im Brennraum 7 beeinträchtigt wird.

Die Abstände a bzw. b zwischen den verschobenen Einspritzlöchern 11 können dabei variabel an die jeweiligen Anforderungen angepaßt werden.

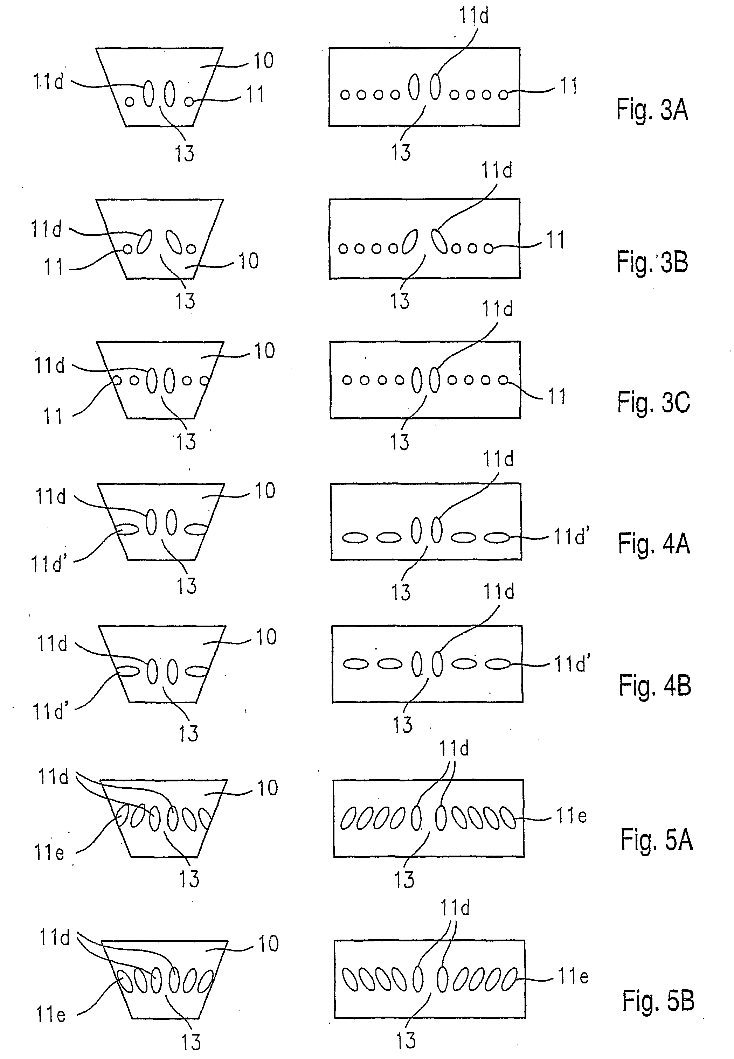

In Fig. 3A bis 3C sind verschiedene Kombinationen von runden Einspritzlöchern 11 mit länglichen Einspritzlöchern 11d dargestellt. Längliche Einspritzlochquerschnitte haben gegenüber runden Querschnittsformen den Vorteil, daß sie einen höheren Strömungsdurchflußbeiwert besitzen, d. h. die Strömung wird im Vergleich zu runden Einspritzlöchern weniger stark gestört. Dadurch können Reibungs- und Turbulenzverluste verringert bzw. als Konsequenz auch der Systemdruck verringert werden.

In Fig. 3A ist eine Kombination aus runden Einspritzlöchern 11 und länglichen Einspritzlöchern 11d dargestellt, bei der sich die runden Einspritzlöcher 11 in gleicher Ebene mit den abspritzseitigen Enden der länglichen Einspritzlöcher 11d befinden. Die länglichen Einspritzlöcher 11d sind rechts und links der Zündkerzenlücke 13 angeordnet.

In Fig. 3B sind die länglichen Einspritzlöcher 11d zusätzlich um einen frei wählbaren Winkel, der im vorliegenden Beispiel etwa 45° beträgt, zueinander geneigt.

Wie in Fig. 3C dargestellt, können sich die runden Einspritzlöcher 11 auch in einer Ebene mit den Mittelpunkten der länglichen Einspritzlöcher 11d befinden. In allen drei Fällen kann eine relativ homogene Gemischwolke erzeugt werden, wobei die Einspritzmenge über die Größe der Einspritzlöcher 11, 11d beeinflußt werden kann.

In Fig. 4 werden analog zu den Fig. 3A und 3C zwei Einspritzlochanordnungen dargestellt, bei welchen ausschließlich längliche Einspritzlöcher 11d in den Ventilkörper 10 eingebracht sind.

In Fig. 4A sind die länglichen Einspritzlöcher 11d analog zu Fig. 3A so angeordnet, daß die die Zündkerze 3 begrenzenden länglichen Einspritzlöcher 11d mit ihren abspritzseitigen Enden auf gleicher Ebene mit den übrigen länglichen Einspritzlöchern 11d' liegen, welche umfänglich auf dem Ventilkörper 10 angeordnet und in ihrer Erstreckung um 90° gekippt zu den an der Zündkerzenlücke 13 befindlichen Einspritzlöchern 11d sind. In Fig. 4B sind die umfänglich angeordneten länglichen Einspritzlöcher 11d' in einer Ebene mit den Mittelpunkten der die Zündkerze 3 einfassenden länglichen Einspritzlöcher 11d angeordnet.

Die in Fig. 4A und 4B dargestellten Anordnungen von länglichen Einspritzlöchern 11d, 11d' haben den Vorteil, daß der Fertigungsaufwand niedriger wird, da weniger Einspritzlöcher 11d, 11d' in den Ventilkörper 10 eingebracht werden müssen. Durch die weitgehende Abdeckung des Umfangs des Ventilkörpers 10 mit länglichen Einspritzlöchern 11d' ist eine sehr homogene Verteilung des Brennstoffs bei der Einspritzung gewährleistet.

In Fig. 5 sind zwei Ausführungsbeispiele für eine Anordnung von länglichen Einspritzlöchern 11e unter einem Kippwinkel gegenüber den der Zündkerze 3 benachbarten länglichen Einspritzlöchern 11d dargestellt.

In Fig. 5A sind die länglichen Einspritzlöcher 11e mit ihren oberen, zulaufseitigen Enden in Richtung der der Zündkerze 3 benachbarten länglichen Einspritzlöcher 11d geneigt. Die Neigung der länglichen Einspritzlöcher 11e ist dabei so gestaltet, daß die geneigten Einspritzlöcher 11e zumindest eine parallele Hauptachse aufweisen. Durch weiteres Schrägstellen der länglichen Einspritzlöcher 11e kann eine geringfügige Überlappung der Einspritzstrahlen der einzelnen Einspritzlöcher 11e erzielt werden, wodurch die Homogenität der Gemischwolke weiter verbessert werden kann.

In Fig. 5B ist eine ähnliche Anordnung wie in Fig. 5A dargestellt, wobei sich die länglichen Einspritzlöcher 11e nun in entgegengesetzter Richtung neigen, d. h. die oberen, zulaufseitigen Enden der länglichen Einspritzlöcher 11e neigen sich von den der Zündkerze 3 benachbarten länglichen Einspritzlöchern 11d weg. Hier ist ebenfalls eine geringfügige Überlappung möglich.

Die Erfindung ist nicht auf die dargestellten Ausführungsbeispiele beschränkt und z. B. auch für Brennstoffeinspritzventile 4 mit mehr oder weniger Einspritzlöchern 11 anwendbar. Ebenso können auch längliche Einspritzlöcher 11 auf mehr als einer Reihe angeordnet sein, um dadurch die Homogenität des Brennstoff-Luftgemisches zu verbessern. Die längliche Ausbildung der Einspritzlöcher 11 ist außerdem nicht auf eine optimale elliptische Form beschränkt. Die Querschnittsformen können auch rechteckig oder oval gestaltet sein.

## Patentansprüche

1. Brennstoffeinspritzsystem für Brennkraftmaschinen mit wenigstens einem Brennstoffeinspritzventil (4), das Brennstoff in einen Brennraum (7) mit einer in den Brennraum (7) ragenden Zündkerze (3) einspritzt, wobei das Brennstoffeinspritzventil (4) einen Ventilkörper (10) aufweist, der mehrere umfänglich angeordnete Einspritzlöcher (11) hat, die so angeordnet sind, daß in dem Brennraum (7) ein zumindest nahezu kegelförmiger Einspritzstrahl (5) erzeugt wird,
**dadurch gekennzeichnet,**
**daß** zumindest diejenigen Einspritzlöcher (11d), welche unmittelbar beidseitig der Zündkerze (3) angeordnet sind, einen länglichen Querschnitt aufweisen, während alle restlichen Einspritzlöcher (11, 11d', 11e) eine von den erstgenannten Einspritzlöchern (11d) abweichende Kontur oder Ausrichtung besitzen.

2. Brennstoffeinspritzsystem nach Anspruch 1,
**dadurch gekennzeichnet,**
**daß** die Mittelpunkte der länglichen Einspritzlöcher (11d) in einer Linie mit den restlichen Einspritzlöchern (11, 11d', 11e) liegen.

3. Brennstoffeinspritzsystem nach Anspruch 1,
**dadurch gekennzeichnet,**
**daß** die Enden der länglichen Einspritzlöcher (11d) in einer Linie mit den restlichen Einspritzlöchern (11, 11d', 11e) liegen.

4. Brennstoffeinspritzsystem nach einem der Ansprüche 1 bis 3,
**dadurch gekennzeichnet,**
**daß** alle Einspritzlöcher (11d, 11d', 11e) einen länglichen Querschnitt aufweisen.

5. Brennstoffeinspritzsystem nach einem der Ansprüche 2 bis 4,
**dadurch gekennzeichnet,**
**daß** die unmittelbar neben der Zündkerze (3) liegenden Einspritzlöcher (11d) um einen vorgegebenen Winkel gegenüber den übrigen Einspritzlöchern (11) verkippt sind.

6. Brennstoffeinspritzsystem nach Anspruch 4,
**dadurch gekennzeichnet,**
**daß** die unmittelbar neben der Zündkerze (3) liegenden Einspritzlöcher (11d) eine achsparallele Ausrichtung besitzen, während alle weiteren Einspritzlöcher (11d', 11e) eine davon abweichende Ausrichtung besitzen.

7. Brennstoffeinspritzsystem nach Anspruch 6,
**dadurch gekennzeichnet,**
**daß** die weiteren Einspritzlöcher (11d') um 90° gekippt gegenüber der Ausrichtung der unmittelbar neben der Zündkerze (3) liegenden Einspritzlöcher (11d) ausgerichtet sind.

8. Brennstoffeinspritzsystem nach Anspruch 6,
**dadurch gekennzeichnet,**
**daß** die weiteren Einspritzlöcher (11e) geneigt verlaufen und so angeordnet sind, daß sie jeweils eine parallele Hauptachse aufweisen.

9. Brennstoffeinspritzsystem für Brennkraftmaschinen mit wenigstens einem Brennstoffeinspritzventil (4) , das Brennstoff in einen Brennraum (7) mit einer in den Brennraum (7) ragenden Zündkerze (3) einspritzt, wobei das Brennstoffeinspritzventil (4) einen Ventilkörper (10) aufweist, der mehrere umfänglich angeordnete Einspritzlöcher (11) hat, die so angeordnet sind, daß in dem Brennraum (7) ein zumindest nahezu kegelförmiger Einspritzstrahl (5) erzeugt wird,
**dadurch gekennzeichnet,**
**daß** mindestens die Einspritzlöcher (11b), welche unmittelbar beidseitig der Zündkerze (3) angeordnet sind, in einer gegenüber einer Reihe (12a) der übrigen Einspritzlöcher (11a) versetzten Reihe (12b) angeordnet sind.

10. Brennstoffeinspritzsystem nach Anspruch 9,
**dadurch gekennzeichnet,**
**daß** jeweils zwei Einspritzlöcher (11b, 11c) beidseitig der Zündkerze (3) stufenförmig in zwei gegenüber der Reihe (12a) der übrigen Einspritzlöcher (11a) versetzten Ebenen angeordnet sind.

## Claims

1. Fuel injection system for internal combustion engines, having at least one fuel injection valve (4) which injects fuel into a combustion chamber (7) with a spark plug (3) projecting into the combustion chamber (7), the fuel injection valve (4) having a valve body (10) which has a plurality of peripherally arranged injection holes (11) which are arranged in such a way that an at least virtually conical injection jet (5) is produced in the combustion chamber (7), **characterized in that** at least those injection holes (11d) which are arranged directly on either side of the spark plug (3) have an elongate cross section, while all the remaining injection holes (11, 11d', 11e) have an orientation or contour which deviates from the abovementioned injection holes (11d).

2. Fuel injection system according to Claim 1, **characterized in that** the centre points of the elongate injection holes (11d) lie in line with the remaining injection holes (11, 11d', 11e).

3. Fuel injection system according to Claim 1, **characterized in that** the ends of the elongate injection holes (11d) lie in line with the remaining injection holes (11, 11d', 11e).

4. Fuel injection system according to one of Claims 1 to 3, **characterized in that** all the injection holes (11d, 11d', 11e) have an elongate cross section.

5. Fuel injection system according to one of Claims 2 to 4, **characterized in that** the injection holes (11d) which are located directly adjacent to the spark plug (3) are tilted by a predetermined angle with respect to the other injection holes (11).

6. Fuel injection system according to Claim 4, **characterized in that** the injection holes (11d) which are located directly adjacent to the spark plug (3) have an axially parallel orientation, while all the other injection holes (11d', 11e) have an orientation which deviates from the axially parallel.

7. Fuel injection system according to Claim 6, **characterized in that** the further injection holes (11d') are oriented tilted through 90° with respect to the orientation of the injection holes (11d) located directly adjacent to the spark plug (3).

8. Fuel injection system according to Claim 6, **characterized in that** the further injection holes (11e) are inclined and are arranged in such a way that they each have a parallel main axis.

9. Fuel injection system for internal combustion engines, having at least one fuel injection valve (4) which injects fuel into a combustion chamber (7) with a spark plug (3) projecting into the combustion chamber (7), the fuel injection valve (4) having a valve body (10) which has a plurality of peripherally arranged injection holes (11) which are arranged in such a way that an at least virtually conical injection jet (5) is produced in the combustion chamber (7), **characterized in that** at least the injection holes (11b) which are arranged directly on either side of the spark plug (3) are arranged in a row (12b) which is offset with respect to a row (12a) comprising the other injection holes (11a).

10. Fuel injection system according to Claim 9, **characterized in that** in each case two injection holes (11b, 11c) on both sides of the spark plug (3) are arranged in stepped form in two planes which are offset with respect to the row (12a) comprising the other injection holes (11a).

## Revendications

1. Système d'injection de carburant pour véhicules automobiles, comprenant au moins une soupape d'injection de carburant (4), qui injecte le carburant dans une chambre de combustion (7) à l'aide d'une bougie d'allumage (3) dépassant dans la chambre de combustion (7), la soupape d'injection de carburant (4) présentant un corps de soupape (10) avec plusieurs trous d'injection (11) disposés sur le pourtour et de telle sorte qu'un jet d'injection (5) au moins presque conique soit généré dans la chambre de combustion (7),
**caractérisé en ce qu'**
au moins chacun des trous d'injection (11d) qui sont disposés directement de chaque côté de la bougie d'allumage (3) ont une section oblongue, alors que tous les trous d'injection restants (11, 11d', 11e) ont un contour ou une orientation différente des premiers trous d'injection (11d) cités.

2. Système d'injection de carburant selon la revendication 1,
**caractérisé en ce que**
les centres des trous d'injection (11d) oblongs reposent sur une ligne avec les autres trous d'injection (11, 11d', 11e).

3. Système d'injection de carburant selon la revendication 1,
**caractérisé en ce que**
les extrémités des trous d'injection (11d) oblongs reposent sur une ligne avec les autres trous d'injection (11, 11d', 11e).

4. Système d'injection de carburant selon une des revendications 1 à 3,
**caractérisé en ce que**
tous les trous d'injection (11d, 11d', 11e) présentent une section oblongue.

5. Système d'injection de carburant selon une des revendications 2 à 4,
**caractérisé en ce que**
les trous d'injection (11d) situés directement à côté de la bougie d'allumage (3) sont inclinés selon un angle prédéterminé par rapport aux autres trous d'injection (11).

6. Système d'injection de carburant selon la revendication 4,
**caractérisé en ce que**
les trous d'injection (11d) situés directement à côté de la bougie d'allumage (3) ont une orientation parallèle à l'axe, alors que tous les autres trous d'injection (11d', 11e) ont une orientation différente de celle-ci.

7. Système d'injection de carburant selon la revendication 6,
**caractérisé en ce que**
les autres trous d'injection (11d') sont orientés à 90° par rapport à l'orientation des trous d'injection (11d) directement situés à côté de la bougie d'allumage (3).

8. Système d'injection de carburant selon la revendication 6,
**caractérisé en ce que**
les autres trous d'injection (11e) sont inclinés et sont disposés de telle sorte qu'ils présentent chacun un axe principal parallèle.

9. Système d'injection de carburant pour véhicules automobiles, comprenant au moins une soupape d'injection de carburant (4), qui injecte le carburant dans une chambre de combustion (7) à l'aide d'une bougie d'allumage (3) dépassant dans la chambre de combustion (7), la soupape d'injection de carburant (4) présentant un corps de soupape (10) avec plusieurs trous d'injection (11) disposés sur le pourtour et de telle sorte qu'un jet d'injection (5) au moins presque conique soit généré dans la chambre de combustion (7),
**caractérisé en ce qu'**
au moins les trous d'injection (11b) prévus directement de chaque côté de la bougie d'allumage (3) sont disposés sur une ligne (12b) décalée par rapport à une ligne (12a) des autres trous d'injection (11a).

10. Système d'injection de carburant selon la revendication 9,
**caractérisé en ce que**
deux trous d'injection (11b, 11c) sont chaque fois disposés par étages de chaque côté de la bougie d'allumage (3) dans deux plans décalés par rapport à la ligne (12a) des autres trous d'injection (11a).
